# EUROPÄISCHE PATENTSCHRIFT

(11) **EP 2 963 407 B1**
(45) Veröffentlichungstag und Bekanntmachung des Hinweises auf die Patenterteilung: **12.07.2017**
(21) Anmeldenummer: 15166694.8
(22) Anmeldetag: 07.05.2015
(51) Int. Cl.: G01M 13/02, F16H 55/17

(54) **VERFAHREN UND VORRICHTUNG ZUR PRÜFUNG DER ABSCHERFESTIGKEIT VON ZÄHNEN EINES ZAHNRIEMENS**
METHOD AND DEVICE FOR TESTING THE SHEAR STRENGTH OF THE TEETH OF A TOOTHED BELT
PROCÉDÉ ET DISPOSITIF DE VÉRIFICATION DE LA RÉSISTANCE AU CISAILLEMENT DES DENTS D'UNE COURROIE DENTÉE

(30) Priorität: 04.07.2014 DE 102014212992
(43) Veröffentlichungstag der Anmeldung: 06.01.2016
(73) Patentinhaber: ContiTech Antriebssysteme GmbH, 30165 Hannover (DE)
(72) Erfinder: Fiss, Tim, 30519 Hannover (DE)
(74) Vertreter: Kilsch, Armin Ralph

(56) Entgegenhaltungen:
- DE-A1- 3 214 039
- US-A- 4 237 719

## Beschreibung

Die Erfindung betrifft ein Verfahren zur Prüfung der Abscherfestigkeit von Zähnen eines Zahnriemens unter dynamischer Belastung. Ebenfalls ist eine Vorrichtung zur Durchführung des Verfahrens beansprucht.

Zahnriemen aus elastomerem Material, vorzugsweise aus Gummi, sind in einer Vielzahl von Anwendungen bekannt. Sie bestehen in der Regel aus einem Grundkörper, der einerseits einen ebenen Riemenrücken und andererseits eine Verzahnung aufweist, wobei in den Grundkörper, vorzugsweise in Rückennähe, im Wesentlichen in Riemenlängsrichtung verlaufende Zugträger zur Aufnahme von Riemenlängskräften eingebettet sind.

Solche Antriebsriemen in Form von Zahnriemen werden bei einer Vielzahl von Anwendungen zum Antrieb von Aggregaten bzw. zur Übertragung hoher Leistungen genutzt, insbesondere bei der Anwendung im Kraftfahrzeug. Die dort z.B. als Steuerriemen verwendeten Zahnriemen zeichnen sich gegenüber den Kettentrieben durch bessere Längenkonstanz und in der Regel geringeres Gewicht aus. Außerdem sind sie hoch belastbar und können leicht gewartet werden, sind z.B. bei Kontrolle und evtl. Austausch leichter zugänglich, weil sie nicht im ölgeschmierten Motorgehäuse sondern außerhalb - nur hinter einer Staubkappe - angeordnet sind.

Die Krafteinleitung erfolgt beim Zahnriemen durch die Antriebsscheibe über die Zahnflanken und radial gesehen weiter über den Zahnfuß und den Riemenunterbau bzw. auf den Zugstrang. Die Zähne des Zahnriemens, hier insbesondere Zahnfuß und Zahnflanken, werden bei der Kraftübertragung auf die Zähne einer Zahnscheibe stark belastet. Beim Kraftfluss zwischen Zähnen des Riemens und den Zähnen der Riemenscheibe entstehen im Verbund des Zahnriemens starke Schub- bzw. Scherspannungen, durch die im Extremfall die Zähne des Riemens unter hoher Last deformiert werden können. Bei zu hoher Deformation kommt es zum Zahnabscheren und somit zur Schädigung des Zahnriemens.

Zur Überprüfung der Belastbarkeit sind zerstörende Prüfungen im Stand der Technik bekannt. Hier soll als Maximalbelastung insbesondere die Zahnabscherkraft geprüft werden, also die Belastung, unter der ein Zahn eines Zahnriemens aus elastomerem Material abschert, wie oben beschrieben, und aus der Verzahnung der üblicherweise metallischen Zahnscheibe rutscht.

Für die Überprüfung der Belastbarkeit bzw. Dauerhaltbarkeit von Flachriemen oder Keilriemen, also nicht für die hier betroffenen Zahnriemen, sind im Stand der Technik bereits Lösungen bekannt. So offenbart die US 4 237 719 A eine Vorrichtung mit zwei miteinander über eine Zwischenwelle verbundenen Motoren, durch die eine Drehzahldifferenz erzeugt und ein Schlupf auf die jeweilig zwischen den Motoren und der Zwischenwelle laufenden Antriebsriemen aufgebracht wird. Schlupf und Drehzahldifferenz erlauben dann eine Aussage über die übertragbare Reibungskraft.

Auch die DE 32 14 039 A1 offenbart einen Prüfstand zur dynamischen Prüfung von Keilriemen, bei dem zwei parallele Wellen, von denen eine mit einem Drehantrieb versehen ist, zwei Keilriemenscheiben zum Aufspannen eines zu prüfenden Keilriemens tragen. Für den Keilriemen wird ein Schlupf durch unterschiedliche Übersetzungsverhältnisse der Drehverbindungen an beiden Enden der Welle hervorgerufen.

Dieser Stand der Technik zeigt jedoch keine Lösungen für die Prüfung von Zahnriemen, da dort weniger der Schlupf als vielmehr die Zahnabscherkraft eine wesentliche Rolle spielt.

Die bisherige Prüfung der Zahnabscherkraft an einem Zahnriemen wird in einer statisch arbeitenden Vorrichtung an einer Zugprüfmaschine durchgeführt. Dabei wird ein einzelner Zahn des zu prüfenden Riemens in einer korrespondierenden Zahnlücke einer Zahnscheibe aufgenommen und über eine bewegliche Platte auf seinem Rücken mit einer definierten Kraft in die Lücke der feststehenden Zahnscheibe gepresst. Durch das Herausziehen des Riemens aus dieser Vorrichtung wird die Kraft bestimmt, die erforderlich ist, um den Riemenzahn abzuscheren oder ihn durch die verbleibende Vorrichtungslücke fließen zu lassen.

Nachteilig bei dieser Art der Prüfung ist es, dass keine dynamische Belastung vorgesehen ist, die ggf. zum Ausfall führt, sondern ein Gewaltbruch wie bei einem üblichen Zugversuch. Durch die mangelnde Berücksichtigung eines Lastspielverhaltens ergibt sich durch diese Art der Prüfung auch keine ausreichende Korrelation zum Lebensdauerverhalten eines Zahnriemens.

Zudem erfolgt gemessen an der tatsächlichen Betriebssituation eine unrealistische Belastung des Prüfzahns, da mit einer starken Presskraft auf den Riemenrücken gedrückt wird. Es wird so auch nur eine Flanke des Zahn bzw. des Riemens einmalig belastet.

Auch wird die Umschlingung der Zahnscheibe, wie sie im realen Betrieb vorhanden ist, nicht nachgebildet, so dass die erforderliche Prüfkraft bei dieser Prüfung wesentlich höher ist, als im realen Betrieb zu erwarten. Im realen Betrieb würde der Zahnriemen oft auch eher überspringen. Daher ist bei den bisher gängigen Prüfungen eine belastbare Aussage über die Kraft, bei der ein Zahnriemen unter späteren realistischen Betriebsbedingungen tatsächlich abscheren könnte, kaum zu erwarten.

Für die Erfindung bestand also die Aufgabe, ein Prüfverfahren und eine Prüfvorrichtung zur Prüfung der Zahnabscherkraft bei Zahnriemen vorzustellen, bei denen eine dynamische Belastung des zu prüfenden Zahns bis zum Zahnabscheren erfolgt, eine Belastung eines Prüfzahns in realistischer Art und Weise vorhanden ist und eine Ermittlung der Zahnabscherfestigkeit als Ausfallfunktion über eine Lastspielzahl erfolgt und nicht durch einen einfachen Gewaltbruch.

Gelöst wird diese Aufgabe durch die Merkmale des unabhängigen Verfahrensanspruchs. Weitere vorteilhafte Ausbildungen sind in den zugehörigen Unteransprüchen offenbart. Ebenfalls gelöst ist die Aufgabe durch den unabhängigen Vorrichtungsanspruch und durch die entsprechenden Unteransprüche.

Ausgehend von der allgemeinen verfahrensgemäßen Lösung, das der Zahnriemen realitätsnah um eine freilaufend drehbare Zahnscheibe gespannt und mit einer pulsierenden Zugkraft belastet wird und dabei ein Zahn des Zahnriemens in einer Aussparung der Zahnscheibe durch eine Matrize aufgenommen und die auf den Zahn wirkende Scherbelastung abgestützt und gemessen wird, wird bei dem erfindungsgemäßen Verfahren der zu prüfende Zahnriemen aufgeschnitten und mit einem vorgegebenen Umschlingungswinkel um eine Zahnscheibe gespannt, die aus einer inneren Trommel und einem die Trommel freilaufend drehbar umgebenden äußeren Zahnring besteht. Danach wird der Zahnriemen durch an seinen Enden aufgesetzte Klemmen mit einer pulsierenden Zugkraft belastet. In einer innerhalb des Umschlingungswinkels angeordneten Aussparung des Zahnrings wird ein einziger Zahn des Zahnriemens in einer zur Trommel gehörigen separaten Kulisse aufgenommen und das durch den Zahn auf die Trommel ausgeübte Drehmoment abgestützt und gemessen.

Hierdurch ergibt sich eine um ein Vielfaches verbesserte Korrelation zwischen Prüfbedingungen und dem realen Lebensdauerverhalten eines Zahnriemens. Die Ausfallwahrscheinlichkeit durch Abscheren eines Zahnes / Zahnabscherfestigkeit kann unter realistischen Betriebsbedingungen sowie bei erhöhtem Lastniveau geprüft werden, so dass die Entwicklung verbesserter Zahnriemen mit höherer Zahnfestigkeit ermöglicht wird.

Eine vorteilhafte Weiterbildung besteht darin, dass die pulsierende Zugkraft in einer Frequenz von 1 bis 30 Hertz aufgebracht wird. Dies spiegelt das tatsächlich auftretende Schwingungsverhalten von Riementrieben sehr gut wieder.

Eine weitere vorteilhafte Ausbildung besteht darin, dass das Verfahren durch seine einfachen Verfahrensschritte leicht bei einer Temperatur von -20° C bis +130° C ausgeführt werden kann, so dass auf einfache Weise Temperatureinflüsse in die Lebensdauerabschätzung mit aufgenommen werden können.

Eine weitere vorteilhafte Ausbildung im Sinne einer genaueren Bestimmung der Haltbarkeit eines Zahnriemens besteht darin, dass die Abscherfestigkeit unter vorbestimmten Lastkollektiven aus Pulsfrequenz, der Höhe der Zugkraft und der Temperatur geprüft wird

Zur Durchführung des erfindungsgemäßen Verfahrens ist eine Vorrichtung besonders geeignet, wie sie in dem folgenden Ausführungsbeispiel dargestellt ist. Es zeigen
- Fig. 1: eine Skizze einer Gesamtansicht einer erfindungsgemäßen Prüfvorrichtung als Seitenansicht
- Fig. 2: eine perspektivische Einzeldarstellung des zur erfindungsgemäßen Prüfvorrichtung gehörigen Zahnrings
- Fig. 3: eine perspektivische Teil-Zusammenstellung des zur erfindungsgemäßen Prüfvorrichtung gehörigen Zahnrings mit aufgelegtem Zahnriemen
- Fig. 4: eine perspektivische Einzeldarstellung der zur erfindungsgemäßen Prüfvorrichtung gehörigen Kulisse zur Aufnahme des zu prüfenden Zahns
- Fig. 5: eine perspektivische Einzeldarstellung der zur erfindungsgemäßen Prüfvorrichtung gehörigen Trommel
- Fig. 6: eine perspektivische Teil-Zusammenstellung der erfindungsgemäßen Prüfvorrichtung mit Zahnring, aufgelegtem Zahnriemen, Trommel, Kulisse, Umlenkrolle und Teilen des Rahmens
- Fig. 7: eine perspektivische Skizze einer Gesamtansicht einer erfindungsgemäßen Prüfvorrichtung
- Fig. 8: eine weitere perspektivische Darstellung einer Gesamtansicht einer erfindungsgemäßen Prüfvorrichtung

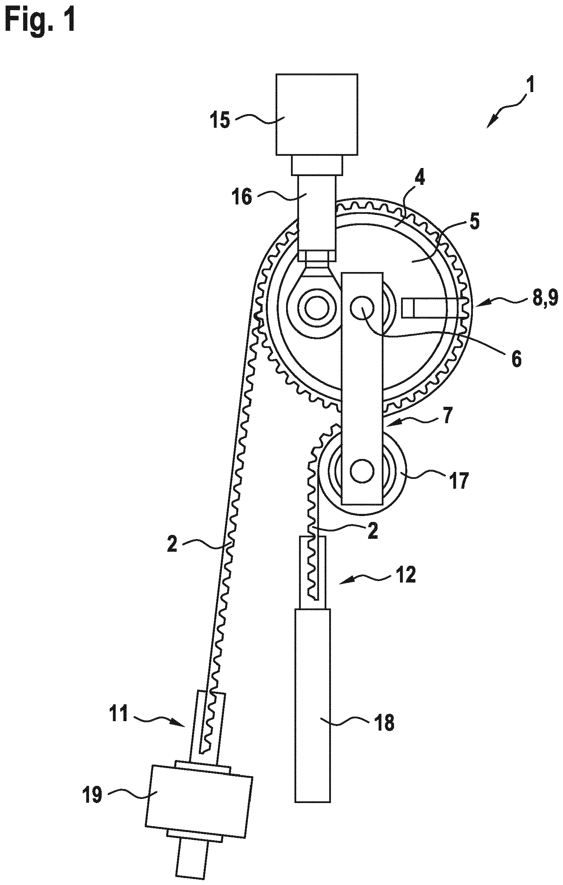

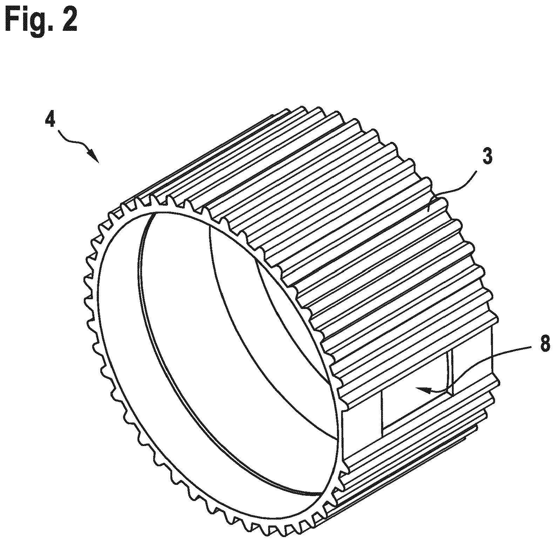

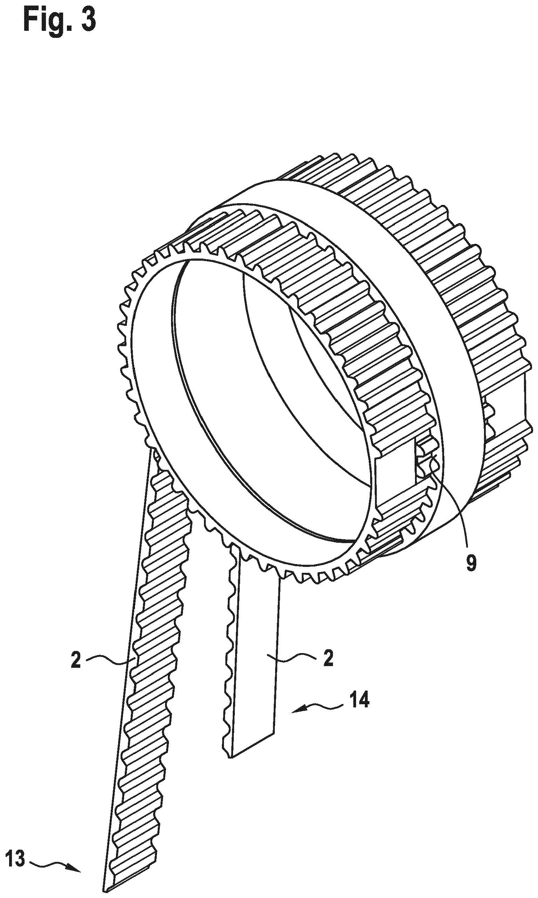

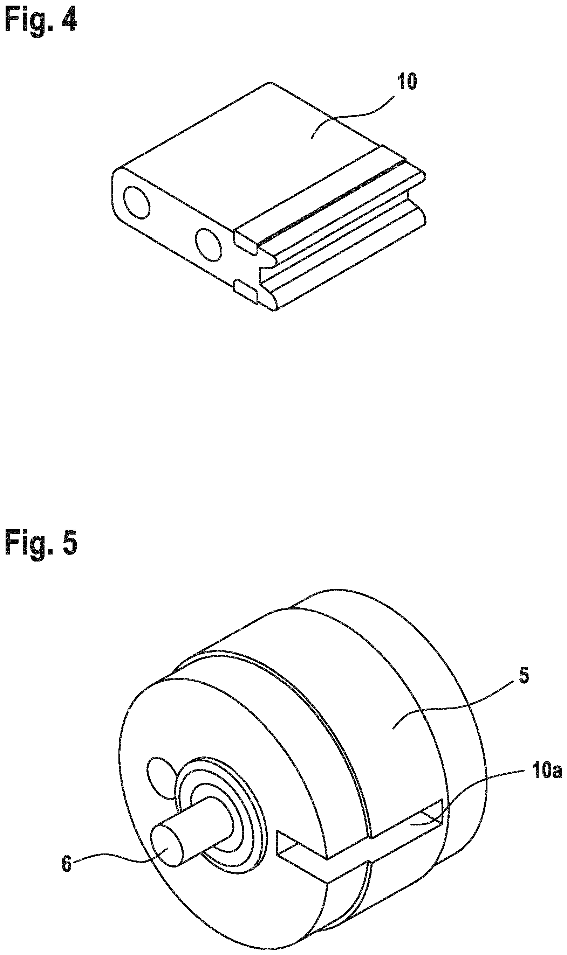

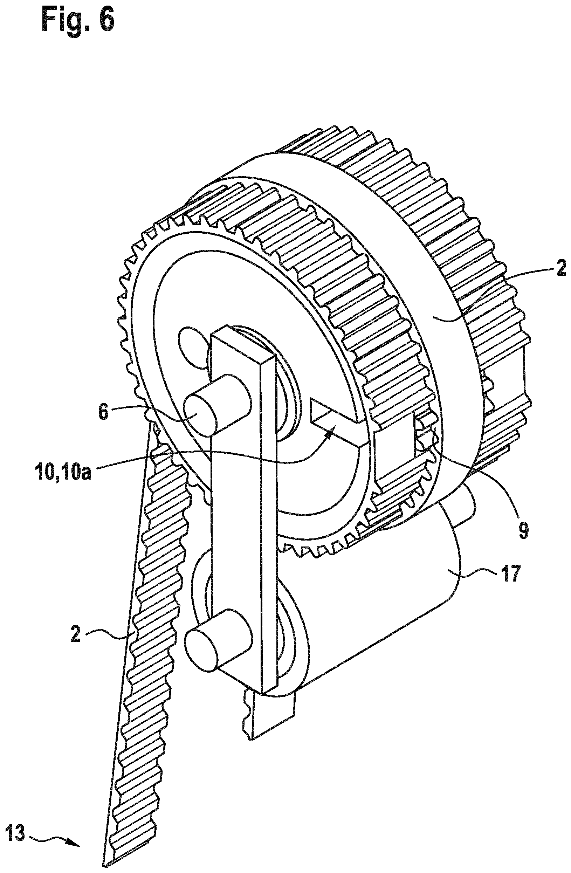

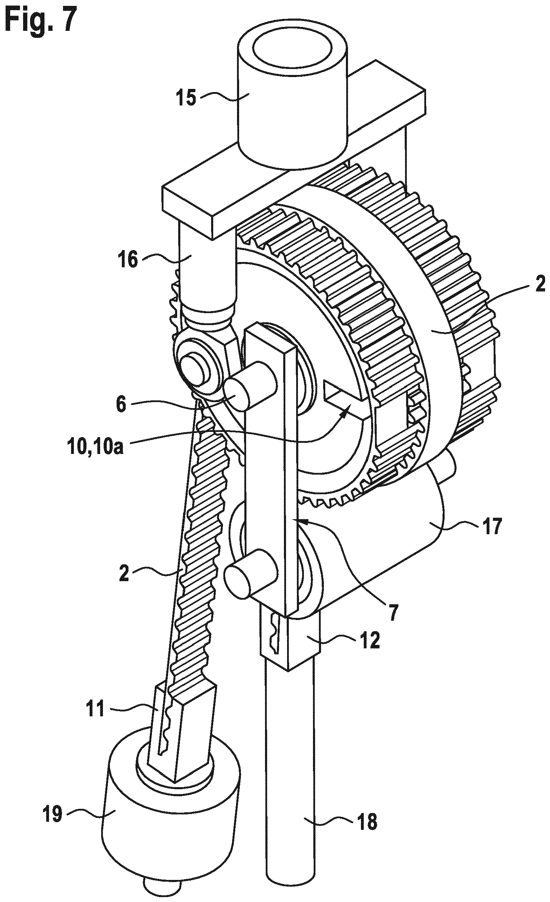

Die Fig. 1 zeigt eine Gesamtansicht einer Vorrichtung 1 zur Prüfung der Abscherfestigkeit von Zähnen eines Zahnriemens unter dynamischer Belastung. Dort und in der Zusammenschau der Fig. 1 bis 8 ist sichtbar, dass ein aufgeschnittener Zahnriemen 2 an Stelle einer Riemenscheibe einen mit einer Außenverzahnung 3versehenen Zahnring 4, also einen ringförmigen Riementräger, mindestens teilweise umschlingt. Die Außenverzahnung des Zahnrings 4 ist zur Verzahnung des Zahnriemens 2 komplementär ausgebildet, so dass sich Eingriffsverhältnisse genau wie bei einer Riemenscheibe ergeben.

Der Zahnring 4 ist auf einer Trommel 5 und relativ zu dieser frei drehbar gelagert. wobei die Trommel 5 mit ihrer Achse 6 ebenfalls drehbar in einem hier nicht näher und in allen Teilen dargestellten festen Rahmen 7 gelagert ist, ebenso wie die übrigen notwendigerweise rahmengelagerten Teile der Vorrichtung, wie die Umlenkrolle 17, der Hydropulser 18 und der Schlauchrollbalg 19, die Kraftmesseinrichtung 15, die Drehmomentenstütze 16 etc.

Der Zahnring 4 wird mit zwei so genannten Dünnringlagern, hier nicht näher dargestellt, auf der Trommel 5 gelagert. Der Zahnring kann somit frei drehen, wobei die Drehbewegung des Zahnrings nur durch zwei hier ebenfalls nicht näher dargestellte Abschaltkontakte begrenzt wird.

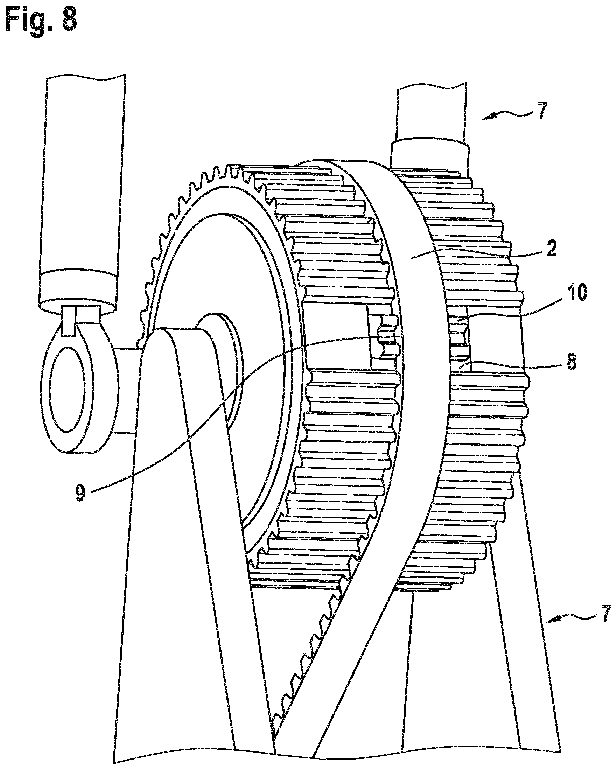

Der Zahnring 4 ist auf seinem Umfang mit einer Ausnehmung 8 im Bereich eines zu prüfenden und innerhalb der Umschlingung sich befindlichen Zahns 9 versehen. Die Ausnehmung 8 des Zahnrings 4 erstreckt sich in Umfangsrichtung über mehr als eine Zahnteilung des Zahnriemens 2 bzw. des Zahnrings 4, wie insbesondere aus der Fig. 8 ersichtlich.

An der Trommel 5 ist in einer entsprechenden Aufnahme 10a eine Prüfkulisse 10 fixiert, die durch die Ausnehmung 8 des Zahnrings hindurchgreift und in Form einer Matrize den zu prüfenden Zahn 9 aufnimmt. Die Prüfkulisse 10 weist hier eine Breite von 30mm auf, ist aus gehärtetem Material erodiert und wird mittig in der Ausnehmung 8 des Zahnrings 4 positioniert. Die der Aufnahme 10a in der Trommel 5 fixierte Prüfkulisse 10 greift in den Zahnriemen ein. Dabei besteht in Umfangsrichtung ausreichend Freigang, um eine Zahndeformation bis zum Abscheren zu ermöglichen. Die "Lückengröße" der Ausnehmung in Umfangsrichtung, die, wie oben dargestellt, mehr als eine Zahnteilung des Zahnriemens 2 bzw. des Zahnrings 4 umfasst, ist so gewählt, dass benachbarte Zähne keinen Beitrag zur Abscherkraft leisten.

An der Prüfvorrichtung 1 sind Klemmen 11 und 12 zur Aufnahme der durch das Aufschneiden entstandenen Enden 13 und 14 des Zahnriemens vorgesehen. Die Klemmen 11 und 12 dienen zum Aufbringen einer Zugbelastung auf den Zahnriemen 2. Zur kraftschlüssigen Aufnahme der Riemenenden 13 und 14 sind die Klemmen zur Verzahnung des Riemens komplementär ausgebildet.

Eine der Klemmen, hier die Klemme 11 bringt eine konstante Zugbelastung auf den Zahnriemen 2 auf, während die andere Klemme, hier die Klemme 12 eine pulsierende Zugkraft auf den Zahnriemen 2 aufbringt

Ebenfalls an der Trommel 5 ist eine auf eine Kraftmesseinrichtung 15 wirkende und im Rahmen 7 abgestützte Drehmomentenstütze 16 angeordnet, wobei die Kraftmesseinrichtung 15 die auf den von der Kulisse 10 aufgenommenen zu prüfenden Zahn 9 wirkenden Kräfte aufnimmt und an eine entsprechende, hier nicht näher dargestellte Verarbeitungseinheit weitergibt.

Bei dieser Prüfvorrichtung wirkt die die pulsierende Zugkraft aufbringende Klemme 12 über eine ebenfalls im Rahmen gelagerte und rückseitig den Riemen 2 spannende Umlenkrolle 17 auf den Zahnriemen 2. Dadurch wird die Rahmengröße minimiert und es ergibt sich eine besonders kompakte Bauweise der Prüfvorrichtung.

Die die pulsierende Zugkraft aufbringende Klemme 12 ist vorteilhafterweise durch einen Hydraulikzylinder 18, einen so genannten Hydropulser, mit einer alternierenden Zugkraft beaufschlagt. Dies erlaubt eine einfache, kompakte Bauart sowie das Aufbringen sehr großer Kräfte.

Bei dieser Ausführung ist der Hydropulser 18 im Zusammenwirken mit der rückseitig den Riemen 2 spannende Umlenkrolle 17 vorteilhafterweise so angeordnet, dass die Zugkraft der die pulsierende Zugkraft aufbringende Klemme 12 in Richtung der Achse der Drehmomentenstütze 16 wirkt. Das minimiert die Rahmenbelastung und erlaubt eine vernünftige Auslegung der Prüfvorrichtung.

In der hier gezeigten vorteilhaften Ausführung einer möglichst kompakten und klein bauenden Vorrichtung ist außerdem die Drehmomentenstütze 16 der Prüfkulisse 10 gegenüberliegend angeordnet ist.

Zum Aufbringen einer konstanten Kraft auch bei einer Längenänderung des Zahnriemens 2 unter Belastung wird bei der hier gezeigten Prüfvorrichtung die die konstante Zugkraft aufbringende Klemme 11 durch einen luftdruckbetriebenen Schlauchrollbalg 19 beaufschlagt.

Mit der hier gezeigten Ausführung ist die Prüfung von Riemenbreiten zwischen 15 und 30 mm möglich. Entsprechend andere Auslegungen lassen sich natürlich für andere Riemenbreiten verwenden.

Die Prüfvorrichtung kann leicht in einer Wärmekammer einer Prüfmaschine montiert werden, so dass Prüfungen mit unterschiedlichen Temperaturen möglich sind. Die Montage erfolgt dann so, dass der Schlauchrollbalg 19 und die Kraftmesseinrichtung 15 (Kraftmessdose) sowie der Hydropulser 18 außerhalb dieser Wärmekammer liegen.

Das mit dieser Prüfvorrichtung durchführbare Prüfverfahren wird zusammenfassend also folgendermaßen durchgeführt: Der aufgeschnittene Riemen wird auf die Zahnscheibe gelegt. Durch seine Teilung richtet er automatisch den Zahnring 4, d.h. den Zahnscheibenkranz zur Kulisse aus. Das eine Riemenende wird über die Umlenkrolle in der Klemmung des Linearzylinders kraftfrei befestigt. Das andere Riemenende wird in der Klemmung des Schlauchrollbalgs befestigt. Der Schlauchrollbalg wird mit Druck beaufschlagt, dadurch spannt sich der Abschnitt des Riemens bis zur Kulisse mit der über den Luftdruck einstellbaren Vorspannung vor. Diese Vorspannung wird direkt als negative Drehmomentabstützkraft an der Kraftmessdose gemessen. Der Linearzylinder wird nach unten gefahren, bis er die Kulisse in die entgegengesetzte Richtung zu belasten beginnt. Er wird weiter verfahren, bis die Drehmomentabstützkraft Nullwert erreicht hat. In dieser Position ist der Riemen vorgespannt mit der eingestellten Vorspannung, aber es wird keine Kraft auf die Kulisse ausgeübt. Von dieser Position ausgehend kann eine Prüfung gestartet werden, deren Prüfzahnbelastung pulsierend frei einstellbar ist.

### Bezugszeichenliste

### (Teil der Beschreibung)

- 1: Prüfvorrichtung
- 2: Zahnriemen
- 3: Außenverzahnung
- 4: Zahnring
- 5: Trommel
- 6: Trommelachse
- 7: Rahmen
- 8: Ausnehmung
- 9: Geprüfter Zahn
- 10: Prüfkulisse
- 10a: Aufnahme der Prüfkulisse
- 11: Klemme
- 12: Klemme
- 13: Abschnitts-Ende des Zahnriemens
- 14: Abschnitts-Ende des Zahnriemens
- 15: Kraftmessdose
- 16: Drehmomentenstütze
- 17: Umlenkrolle
- 18: Hydropulser
- 19: Schlauchrollbalg

## Patentansprüche

1. Verfahren zur Prüfung der Abscherfestigkeit von Zähnen (9) eines Zahnriemens (2) unter dynamischer Belastung mittels einer Vorrichtung nach einem der Ansprüche 5 bis 10, bei dem der Zahnriemen (2) um eine freilaufend drehbare Zahnscheibe gespannt und mit einer pulsierenden Zugkraft belastet wird, **dadurch gekennzeichnet, dass** der Zahnriemen (2) aufgeschnitten und mit einem vorgegebenen Umschlingungswinkel um eine Zahnscheibe gespannt wird, die aus einer inneren Tromme (5) 1 und einem die Trommel freilaufend drehbar umgebenden äußeren Zahnring (4) besteht, wobei der Zahnriemen (2) durch an seinen Enden aufgesetzte Klemmen (11) mit einer pulsierenden Zugkraft belastet wird und dabei in einer innerhalb des Umschlingungswinkels angeordneten Aussparung des Zahnrings (4) ein Zahn (9) des Zahnriemens (2) in einer zur Trommel (5) gehörigen separaten Kulisse (10) in Form einer Matrize aufgenommen und das durch den Zahn (9) auf die Trommel (5) ausgeübte Drehmoment abgestützt und gemessen wird.

2. Verfahren nach Anspruch 1, bei dem die pulsierende Zugkraft in einer Frequenz von 1 bis 30 Hertz aufgebracht wird.

3. Verfahren nach einem der Ansprüche 1 oder 2, ausgeführt bei einer Temperatur von - 20° C bis +130° C.

4. Verfahren nach einem der Ansprüche 1 bis 3, bei dem die Abscherfestigkeit unter vorbestimmten Lastkollektiven aus Pulsfrequenz, der Höhe der Zugkraft und der Temperatur geprüft wird.

5. Vorrichtung (1) zur Prüfung der Abscherfestigkeit von Zähnen (9) eines Zahnriemens (2) unter dynamischer Belastung nach einem Ansprüche 1 bis 4, bei der
a) ein aufgeschnittener Zahnriemen (2) einen mit einer Außenverzahnung (3) versehenen Zahnring (4) mindestens teilweise umschlingt,
- wobei der Zahnring (4) auf einer Trommel (5) und relativ zu dieser frei drehbar gelagert ist,
- wobei die Trommel (5) mit ihrer Achse (6) ebenfalls drehbar in einem Rahmen (7) gelagert ist
- wobei der Zahnring (4) auf seinem Umfang mit einer Ausnehmung (8) im Bereich eines zu prüfenden innerhalb der Umschlingung befindlichen Zahns (9) versehen ist,
- wobei sich die Ausnehmung (8) des Zahnrings (4) in Umfangsrichtung über mehr als eine Zahnteilung erstreckt,
- wobei in eine Aufnahme 10a der Trommel (5) eine Prüfkulisse (10) fixiert ist, die durch die Ausnehmung (8) des Zahnrings hindurchgreift und als Matrize den zu prüfenden Zahn (9) aufnimmt,
b) Klemmen (11, 12) zur Aufnahme der nach dem Aufschneiden entstandenen Enden (13, 14) des Zahnriemens (2) und zum Aufbringen einer Zugbelastung auf den Zahnriemen vorgesehen sind, wobei
- eine der Klemmen (11) eine konstante Zugbelastung auf den Zahnriemen aufbringt und
- die andere der Klemmen (12) eine pulsierende Zugkraft auf den Zahnriemen aufbringt
c) an der Trommel (5) eine auf eine Kraftmesseinrichtung (15) wirkende und im Rahmen abgestützte Drehmomentenstütze (16) angeordnet ist, wobei die Kraftmesseinrichtung (15) die auf den von der Kulisse (10) aufgenommenen zu prüfenden Zahn (9) wirkenden Kräfte aufnimmt und an eine entsprechende Verarbeitungseinheit weitergibt.

6. Prüfvorrichtung nach Anspruch 5, bei der die die pulsierende Zugkraft aufbringende Klemme (12) über eine ebenfalls im Rahmen gelagerte und rückseitig den Riemen spannende Umlenkrolle (7) auf den Zahnriemen wirkt.

7. Prüfvorrichtung nach Anspruch 5 oder 6, bei der die die pulsierende Zugkraft aufbringende Klemme (12) durch einen Hydraulikzylinder (18) mit einer alternierenden Zugkraft beaufschlagt ist.

8. Prüfvorrichtung nach einem der Ansprüche 5 bis 7, bei der die Zugkraft der die pulsierende Zugkraft aufbringende Klemme (12) in Richtung der Achse der Drehmomentenstütze (16) wirkt.

9. Prüfvorrichtung nach einem der Ansprüche 5 bis 8, bei der die Drehmomentenstütze (16) der Prüfkulisse (10) gegenüberliegend angeordnet ist.

10. Prüfvorrichtung nach einem der Ansprüche 5 bis 9, bei der die die konstante Zugkraft aufbringende Klemme (11) durch einen luftdruckbetriebenen Schlauchrollbalg (19) beaufschlagt wird.

## Claims

1. Method for testing the shear strength of teeth (9) of a toothed belt (2) under dynamic loading by means of a device according to one of Claims 5 to 10, in which the toothed belt (2) is tensioned around a freely rotatable toothed pulley and is loaded with a pulsating tensile force, **characterized in that** the toothed belt (2) is cut open and tensioned with a predetermined angle of wrap around a toothed pulley, which consists of an inner drum (5) and an outer toothed ring (4) surrounding the drum in a freely rotatable manner, the toothed belt (2) being loaded with a pulsating tensile force by clamps (11) placed on its ends and, in a clearance of the toothed ring (4) that is arranged within the angle of wrap, a tooth (9) of the toothed belt (2) being received in a separate slotted link (10) associated with the drum (5) and in the form of a die, and the torque that is exerted on the drum (5) by the tooth (9) being supported and measured.

2. Method according to Claim 1, in which the pulsating tensile force is applied at a frequency of 1 to 30 Hertz.

3. Method according to either of Claims 1 and 2, performed at a temperature of from -20°C to +130°C.

4. Method according to one of Claims 1 to 3, in which the shear strength is tested under predetermined load collectives comprising the pulse frequency, the level of the tensile force and the temperature.

5. Device (1) for testing the shear strength of teeth (9) of a toothed belt (2) under dynamic loading according to one of Claims 1 to 4, in which
a) a cut-open toothed belt (2) wraps at least partially around a toothed ring (4) provided with an external toothing (3),
- the toothed ring (4) being mounted on a drum (5) and freely rotatably in relation thereto,
- the drum (5) being mounted with its axis (6) likewise rotatably in a frame (7),
- the toothed ring (4) being provided on its circumference with a clearance (8) in the region of a tooth (9) to be tested that is located within the wrap,
- the clearance (8) of the toothed ring (4) extending in the circumferential direction over more than one tooth pitch,
- a testing slotted link (10), which reaches through the clearance (8) of the toothed ring and as a die receives the tooth (9) to be tested, being fixed in a mounting 10a of the drum (5),
b) clamps (11, 12) for receiving the ends (13, 14) of the toothed belt (2) that are created after the cutting open and for applying a tensile loading to the toothed belt are provided,
- one of the clamps (11) applying a constant tensile loading to the toothed belt and
- the other of the clamps (12) applying a pulsating tensile force to the toothed belt,
c) a torque support (16), acting on a force measuring device (15) and supported in the frame, is arranged on the drum (5), the force measuring device (15) recording the forces acting on the tooth (9) to be tested that is received by the slotted link (10) and passing on these forces to a corresponding processing unit.

6. Testing device according to Claim 5, in which the clamp (12) applying the pulsating tensile force acts on the toothed belt by way of a deflecting roller (7), which is likewise mounted in the frame and tensions the belt on the rear side.

7. Testing device according to Claim 5 or 6, in which the clamp (12) applying the pulsating tensile force is subjected to an alternating tensile force by a hydraulic cylinder (18).

8. Testing device according to one of Claims 5 to 7, in which the tensile force of the clamp (12) applying the pulsating tensile force acts in the direction of the axis of the torque support (16).

9. Testing device according to one of Claims 5 to 8, in which the torque support (16) is arranged lying opposite the testing slotted link (10).

10. Testing device according to one of Claims 5 to 9, in which the clamp (11) applying the constant tensile force is acted upon by a tubular rolling lobe (19) operated by compressed air.

## Revendications

1. Procédé de contrôle de la résistance au cisaillement de dents (9) d'une courroie crantée (2) sous contrainte dynamique au moyen d'un dispositif selon l'une des revendications 5 à 10, avec lequel la courroie crantée (2) est tendue autour d'une poulie de courroie pouvant tourner en roue libre et sollicitée avec une force de traction impulsionnelle, **caractérisé en ce que** la courroie crantée (2) est coupée puis tendue avec un angle d'enroulement prédéfini autour d'une poulie de courroie, laquelle se compose d'un tambour intérieur (5) et d'une couronne dentée (4) extérieure qui entoure le tambour avec rotation en roue libre, la courroie crantée (2) étant sollicitée avec une force de traction impulsionnelle par des pinces (11) montées à ses extrémités et une dent (9) de la courroie crantée (2) étant ici accueillie dans une coulisse (10) séparée sous la forme d'une matrice qui fait partie du tambour (5) dans une cavité de la couronne dentée (4) disposée à l'intérieur de l'angle d'enroulement, et le couple exercé sur le tambour (5) par la dent (9) est supporté et mesuré.

2. Procédé selon la revendication 1, avec lequel la force de traction impulsionnelle est appliquée à une fréquence de 1 à 30 Hertz.

3. Procédé selon l'une des revendications 1 ou 2, mis en oeuvre à une température de -20 °C à +130 °C.

4. Procédé selon l'une des revendications 1 à 3, avec lequel la résistance au cisaillement est contrôlée sous des collectifs de charge prédéterminés composés de la fréquence d'impulsion, de l'amplitude de la force de traction et de la température.

5. Dispositif (1) de contrôle de la résistance au cisaillement de dents (9) d'une courroie crantée (2) sous contrainte dynamique selon l'une des revendications 1 à 4, avec lequel
a) une courroie crantée (2) coupée est enroulée au moins partiellement autour d'une couronne dentée (4) pourvue d'une denture extérieure (3),
- la couronne dentée (4) étant montée sur un tambour (5) et pouvant tourner librement par rapport à celui-ci,
- le tambour (5) étant monté dans un cadre (7) avec son axe (6) de manière à pouvoir lui aussi tourner,
- la couronne dentée (4) étant pourvue sur son pourtour d'un évidement (8) dans la zone d'une dent (9) à contrôler qui se trouve à l'intérieur de l'enroulement,
- l'évidement (8) de la couronne dentée (4) s'étendant sur plus d'un pas de dent dans le sens du pourtour,
- une coulisse de contrôle (10) étant fixée dans un logement (10a) du tambour (5), laquelle fait saillie à travers l'évidement (8) de la couronne dentée et accueille la dent (9) à contrôle en tant que matrice,
b) il existe des pinces (11, 12) destinées à accueillir les extrémités (13, 14) de la courroie crantée (2) qui sont obtenues après la coupe et à appliquer une contrainte de traction sur la courroie crantée,
- l'une des pinces (11) appliquant une contrainte de traction constante sur la courroie crantée et
- l'autre des pinces (12) appliquant une force de traction impulsionnelle sur la courroie crantée,
c) un support de couple (16) qui agit sur un appareil dynamométrique (15) et qui est soutenu dans le cadre est disposé sur le tambour (5), l'appareil dynamométrique (15) captant les forces agissant sur la dent (9) à contrôler accueillie par la coulisse (10) et les transmettant à une unité de traitement correspondante.

6. Dispositif de contrôle selon la revendication 5, avec lequel la pince (12) qui applique la force de traction impulsionnelle agit sur la courroie crantée par le biais d'un galet de renvoi (7), lui aussi monté dans le cadre et qui tend la courroie par l'arrière.

7. Dispositif de contrôle selon la revendication 5 ou 6, avec lequel la pince (12) qui applique la force de traction impulsionnelle est sollicitée par un vérin hydraulique (18) avec une force de traction alternative.

8. Dispositif de contrôle selon l'une des revendications 5 à 7, avec lequel la force de traction de la pince (12) qui applique la force de traction impulsionnelle agit dans la direction de l'axe du support de couple (16).

9. Dispositif de contrôle selon l'une des revendications 5 à 8, avec lequel le support de couple (16) est disposé à l'opposé de la coulisse de contrôle (10).

10. Dispositif de contrôle selon l'une des revendications 5 à 9, avec lequel la pince (11) qui applique la force de traction constante est sollicitée par un soufflet en forme de boudin (19) à fonctionnement pneumatique.
